# EUROPÄISCHE PATENTANMELDUNG

(11) **EP 2 565 338 A1**
(43) Veröffentlichungstag der Anmeldung: **06.03.2013**
(21) Anmeldenummer: 12006132.0
(22) Anmeldetag: 29.08.2012
(51) Int. Cl.: E04C 2/52, F24D 3/16

(54) **Plattenförmiges Element für Heizungs- oder Kühlsysteme**

(30) Priorität: 30.08.2011 DE 202011104995 U; 26.01.2012 DE 102012001556
(71) Anmelder: Comfort-clima GmbH, 85625 Glonn (DE)
(72) Erfinder: Wedel, Viktoria, 82008 Unterhaching (DE)
(74) Vertreter: Rings, Rolf

(57) **Zusammenfassung**

Es wird ein plattenförmiges Element (10) für Heizungs- oder Kühlsysteme von Gebäuden vorgeschlagen, wobei ein Medium führendes Rohr (1) zum Durchleiten eines Heiz- oder Kühlmediums vorgesehen ist und wobei eine Trägerplatte (2) zur Stabilisierung und Montage des Elements (10) sowie Mittel zur Halterung und Führung des Rohres (1) vorgesehen sind, wobei das Element (10) dadurch gekennzeichnet ist, dass in der Trägerplatte (2) von einem Ende bis zum anderen Ende durchgehende Einfräsungen (3) derart vorgesehen sind, dass die Trägerplatte (2) selbst als Mittel zur Halterung und Führung des Rohres (1) dient, und dass die Trägerplatte (2) als ein Verbundteil aus mindestens einer Gipskartonplatte oder Platte mit einem Gipsanteil sowie einer daran befestigten Folie (4) aufgebaut ist.

## Beschreibung

Die vorliegende Erfindung betrifft ein plattenförmiges Element für Heizungs- oder Kühlsysteme von Gebäuden nach dem Oberbegriff von Anspruch 1. Solche plattenförmigen Elemente werden beispielsweise als sogenannte Flächenheizungen zum Beheizen von Gebäuden an den Innenwänden oder Decken von Räumen installiert. Gleichermaßen können derartige Elemente auch für Kühlsysteme eingesetzt werden, so dass dann eine vergleichsweise großflächige Kühlung durch ein im Inneren der Elemente geführtes Kühlmedium erreichbar ist.

Im Stand der Technik sind derartige plattenförmige Elemente für Heizungs- oder Kühlsysteme von Gebäuden bekannt, bei welchen Rohrleitungen auf einer Seite von einer Grundplatte befestigt werden, wobei die einzelnen Rohrleitungen miteinander über Rohrverbindungen zur Herstellung eines durchgängigen Leitungssystems verbunden werden. Nachteilig bei diesen bekannten Systemen ist, dass zum einen die Befestigung und Montage der Rohrleitungen auf der Oberfläche der Grundplatten vergleichsweise aufwendig ist. Die Rohrleitungen müssen mit einzelnen Halterungen jeweils in gewissen Abständen befestigt werden. Zum anderen weisen derartige Plattenelemente für Flächenheizungen oder ähnliches eine relativ große Aufbauhöhe auf, so dass mit der Installation der Flächenheizung vergleichsweise viel Raum verloren geht. Nicht zuletzt ist bei den bekannten derartigen Plattenelementen nachteilig, dass die Wärme- oder Kälteabstrahlung aufgrund der Grundplatten und ihrer Materialstärke reduziert ist. Die bekannten plattenförmigen Elemente für Flächenheizungen sind zudem durch eine relativ lange Reaktionszeit gekennzeichnet, da zunächst die Wärme oder Kälte von den medienführenden Rohren auf die Grundplatte übertragen werden muss und von dieser sodann nach außen abgestrahlt werden muss. Nicht zuletzt ist bei der Herstellung derartiger plattenförmiger Elemente eine relativ hohe Anzahl von Einzelteilen und Montageschritten erforderlich, da zunächst die Halterungen für Rohrleitungen an der Grundplatte befestigt werden müssen und anschließend die Rohrleitungen jeweils mit ihren Rohrverbindungen an den Halterungen installiert werden müssen.

Demgegenüber ist es die Aufgabe der vorliegenden Erfindung, ein plattenförmiges Element für Heizungs- oder Kühlsysteme von Gebäuden bereitzustellen, welches eine verkürzte Reaktionszeit und eine verbesserte Leistungsfähigkeit bei einer möglichst geringen Aufbauhöhe aufweist.

Diese Aufgabe wird mit dem plattenförmigen Element gemäß Anspruch 1 gelöst. Vorteilhafte Ausgestaltungen und Weiterbildungen der Erfindung sind Gegenstand der abhängigen Ansprüche.

Das plattenförmige Element gemäß der vorliegenden Erfindung ist mit einem ein Medium führenden Rohr zum Durchleiten eines Heiz- oder Kühlmediums sowie einer Trägerplatte zur Stabilisierung und für die Montage des Elements sowie mit Mitteln zur Halterung und Führung des Rohres versehen. Das plattenförmige Element nach der Erfindung ist dadurch gekennzeichnet, dass in der Trägerplatte durchgehende Einfräsungen derart vorgesehen sind, dass die Trägerplatte selbst als das Mittel zur Halterung und Führung des Rohres dient, und dass die Trägerplatte als ein Verbundbauteil aus mindestens einer Gipskartonplatte oder einer Platte mit einem Gipsanteil sowie einer daran befestigten Folie aufgebaut ist. Dadurch, dass die Rohre oder Rohrleitungen in Einfräsungen in der Trägerplatte selbst vorgesehen sind, erfordert das erfindungsgemäße Element keine separaten Befestigungen oder Halterungen wie Rohrschellen oder ähnliches. Außerdem wird hierdurch erreicht, dass die Dicke und damit die Aufbauhöhe des plattenförmigen Elements so weit als möglich reduziert ist. Die Trägerplatte stellt dennoch sicher, dass das plattenförmige Element insgesamt eine ausreichende Festigkeit und insbesondere eine gute Druckstabilität und Bruchfestigkeit hat. Durch das direkte Einbringen der Rohre in die Einfräsungen in der Trägerplatte wird außerdem erreicht, dass die Wärmeübertragung oder alternativ die Kälteübertragung von dem in den Rohren fließenden Medium auf das umgebende Material der Trägerplatte deutlich verbessert wird. Die Rohre sind quasi an drei Seiten von dem Material der Trägerplatte in den Einfräsungen jeweils umgeben und auf der vierten Seite von einer Folie abgedeckt. Hierdurch ergibt sich eine schnelle Reaktionszeit bei der Aufwärmung oder Kühlung der Trägerplatte und damit des zu kühlenden oder zu heizenden Raums in einem Gebäude. Die Einfräsungen der Trägerplatte sind ferner derart vorgesehen, dass sie vorzugsweise von einem Ende bis zum anderen durchgängig, d. h. durchgehend angeordnet sind. Mit dieser Maßnahme kann das Rohr als eine Art Endlosrohr in die Einfräsungen des jeweiligen Plattenelements eingelegt werden, so dass keine aufwendigen Verbindungen oder Zwischenanschlüsse im inneren Bereich des jeweiligen plattenförmigen Elements erforderlich sind.

Die Trägerplatte gemäß dem erfindungsgemäßen plattenförmigen Element ist ferner als ein Verbundteil aus mindestens einer Gipskartonplatte oder einer Platte mit einem Gipsanteil sowie einer daran befestigten Folie aufgebaut. Auf diese Weise ist das Gewicht des Elements stark reduziert, und die als Halterung und Führung für die Rohre dienenden Einfräsungen können mit vergleichsweise geringem Aufwand hergestellt werden. Die an der Trägerplatte befestigte Folie hat den Vorteil, dass ein beidseitig geschlossenes Plattenelement realisiert wird. Die Folie hat ferner den Vorteil, dass gezielt eine Wärme- oder Kälteabstrahlung verbessert oder ausgerichtet werden kann, wenn beispielsweise die Folie als eine metallische Folie oder eine Folie mit einem Metallanteil realisiert ist. Außerdem kann mit einer Folie aus einem wärmeisolierenden Material gezielt die Abstrahlung von Wärme - im Falle einer Flächenheizung beispielsweise - in eine Richtung gesteuert werden.

Nach einer vorteilhaften Ausgestaltung der Erfindung ist das Rohr mit einem vordefinierten Überstand A im Verhältnis zu der Trägerplatte vorgesehen. Während auf der gesamten Fläche das Rohr durch die Einfräsungen im Inneren des Materials der Trägerplatte quasi vollständig integriert ist, stehen somit jeweils nur die Enden des Rohres mit einem vordefinierten Überstand aus der Trägerplatte hervor. Ein vordefinierter Überstand A des Rohres hat den Vorteil, dass die Rohrenden jeweils leicht mit Anschlussleitungen oder mit angrenzenden weiteren Elementen verbunden werden können. Ein Überstand der Rohre im Verhältnis zur Trägerplatte liegt vorzugsweise im Bereich von 10 mm bis 100 m. Die plattenförmigen Elemente nach der Erfindung können auf diese Weise mit relativ geringem Aufwand an Ort und Stelle installiert und angeschlossen werden. Beispielsweise können die Überstände A der Rohrleitungen, wenn es sich um ein Kunststoffrohr oder ein Kunststoffverbundrohr handelt, mit entsprechenden Fittingen an einen Heizkreisverteiler eines Heizungssystems (Vorlauf/Rücklauf) angeschlossen werden.

Nach einer weiteren vorteilhaften Ausgestaltung der Erfindung ist die durchgehende Einfräsung in der Trägerplatte in einer schlangenförmig oder mäanderförmig gebogenen Form weitestgehend ohne Kanten und Ecken vorgesehen. Auf diese Weise wird zum einen eine gleichmäßige Verteilung der Wärme oder Kälte über die gesamte Fläche des Elements sichergestellt. Zum anderen wird so die Erzeugung von Knicken oder unerwünschten Querschnittsreduzierungen der Rohre verhindert, da diese ohne Kanten oder zu starke Winkel in einer gebogenen Form entweder schlangenförmig oder mäanderförmig in den Einfräsungen des Elements eingelegt sind.

Nach einer weiteren vorteilhaften Ausgestaltung der Erfindung ist die Einfräsung bodenseitig rund gebildet. Die Einfräsung, welche vorzugsweise im Wesentlichen dem äußeren Durchmesser des Rohres entspricht, ist am Boden als eine im Querschnitt gerundete Nut ausgestaltet, so dass ein kreisrundes Rohr sich mit seiner Außenseite entsprechend gleichmäßig an das Material der Grundplatte direkt anlegt. Auch diese Maßnahme reduziert die Reaktionszeit des Elements und verbessert die thermische Übertragung der Wärme oder Kälte von dem Rohr auf die Grundplatte. Außerdem wird hierdurch ein sicherer Halt des Rohres in der Trägerplatte gewährleistet, da dieses nicht verrutschen oder sich verschieben kann, sondern in der am Boden gerundeten Einfräsung fest an Ort und Stelle gehalten wird. Alternativ kann die Form der Einfräsung auch ohne Rundung, also eckig, oder mit einer ovalen Form im Querschnitt gebildet sein.

Nach einer weiteren vorteilhaften Ausgestaltung der Erfindung ist die Tiefe der Einfräsung derart gewählt, dass das Rohr im Wesentlichen bündig mit der Oberfläche der Trägerplatte eingebaut ist. Wenn die Trägerplatte und die in die Einfräsung eingelegten Rohre anschließend mit der Folie des Elements bedeckt sind, ergibt sich ein auf beiden Oberflächen gleichmäßig ebenes Element, das ohne weitere bauliche Maßnahmen, wie zum Beispiel ein Verputzen oder einen Estrich, direkt installiert werden kann und weiterverarbeitet werden kann. Beispielsweise kann direkt auf den Oberflächen des Elements eine Dekorfolie oder Tapete aufgeklebt werden.

Nach einer weiteren vorteilhaften Ausgestaltung der Erfindung besteht die Folie aus einem Aluminiummaterial oder einem Verbundmaterial mit mindestens einem Aluminiummaterialanteil. Obwohl die Folie damit relativ dünn und leicht sein kann, sind dennoch eine ausreichende Abdeckung und ein sicherer Verschluss der mit den Rohren bestückten Einfräsungen möglich. Die Verwendung von Aluminium als ein Folienmaterial oder Bestandteil des Folienmaterials hat ferner den Vorteil, dass eine Isolationswirkung auf der einen Seite des Elements erreicht wird, so dass Wärmeverluste oder alternativ Verluste von Kälteenergie reduziert werden können. Nach einer weiteren vorteilhaften Ausgestaltung der Erfindung ist die Folie mit Perforationen versehen. Die Folie ist gemäß diesem Ausführungsbeispiel also nicht als eine geschlossene Folie gebildet, sondern mit einer Vielzahl von kleinen Perforationen bzw. Löchern oder Durchbrüchen. Die Folie kann alternativ auch als eine Gewebefolie hergestellt sein, so dass die Zwischenräume der Gewebefäden als Durchlässe funktionieren. Oder es können großflächigere Durchbrüche oder Löcher in der Folie vorhanden sein, so dass gezielt eine punktuell verstärkte Wärmeabstrahlung oder - isolation erreicht werden kann. Die Verwendung einer perforierten oder gelochten Folie als Oberflächenmaterial des plattenförmigen Elements hat ferner den Vorteil, dass man die akustischen Eigenschaften hierdurch gezielt beeinflussen kann. Bei der Verwendung einer gelochten oder aus einem Gewebe bestehenden Folie wird Schall stärker absorbiert im Vergleich zu einer Folie ohne eine Perforation oder Lochung. Das Element kann daher neben der Kühl- oder Heizfunktion weitere technische Funktionen erfüllen, wie die Herstellung einer gewünschten Raumakustik.

Nach einer weiteren vorteilhaften Ausgestaltung der Erfindung besteht das Rohr aus einem Kunststoffmaterial oder einem Verbundmaterial mit einem Kunststoffanteil. Hierdurch wird eine hohe Biegeflexibilität ermöglicht, die das Einlegen des Rohres in die Einfräsung der Trägerplatte erleichtert. Ferner ist das Element damit vergleichsweise leicht gegenüber anderen derartigen Elementen, die mit Metallrohren bestückt sind. Das Rohr kann gemäß einer alternativen Ausgestaltung der Erfindung auch aus einem Verbundmaterial mit einem Kunststoffanteil und/oder einem metallischen Werkstoff hergestellt sein.

Nach einer weiteren vorteilhaften Ausgestaltung der Erfindung ist die Trägerplatte des plattenförmigen Elements eine Gipskartonplatte mit mindestens einseitiger Beschichtung mit Karton. Die Kartonbeschichtung hat den Vorteil, dass die Trägerplatte zumindest einseitig gegenüber Bruch relativ geschützt ist, solange die Kartonschicht unbeschädigt ist. Die Kartonbeschichtung ist vergleichsweise dünn und erhöht kaum die Aufbauhöhe des Elements. Mit dem erfindungsgemäßen Element wird daher ein sehr dünnes plattenförmiges Element bereitgestellt, das dennoch einen hohen Wirkungsgrad für ein Heizen oder Kühlen von Räumen in Gebäuden ermöglicht.

Weitere Vorteile und Merkmale der Erfindung werden im Folgenden aus der Beschreibung von mehreren Ausführungsbeispielen deutlicher offenbar werden, die im Zusammenhang mit den beigefügten Zeichnungen erfolgt. In den Zeichnungen zeigen:
- Fig. 1: eine Querschnittsansicht eines ersten Ausführungsbeispiels eines erfindungsgemäßen Elements;
- Fig. 2: eine Querschnittsansicht eines zweiten Ausführungsbeispiels eines erfindungsgemäßen Elements;
- Fig. 3: eine Querschnittsansicht eines dritten Ausführungsbeispiels eines erfindungsgemäßen Elements;
- Fig. 4: eine teilweise Draufsicht eines vierten Ausführungsbeispiels eines erfindungsgemäßen Elements zur Veranschaulichung der Form der Einfräsung in der Trägerplatte; und
- Fig. 5: eine teilweise Draufsicht eines fünften Ausführungsbeispiels eines erfindungsgemäßen Elements zur Veranschaulichung der Form der Einfräsung in der Trägerplatte.

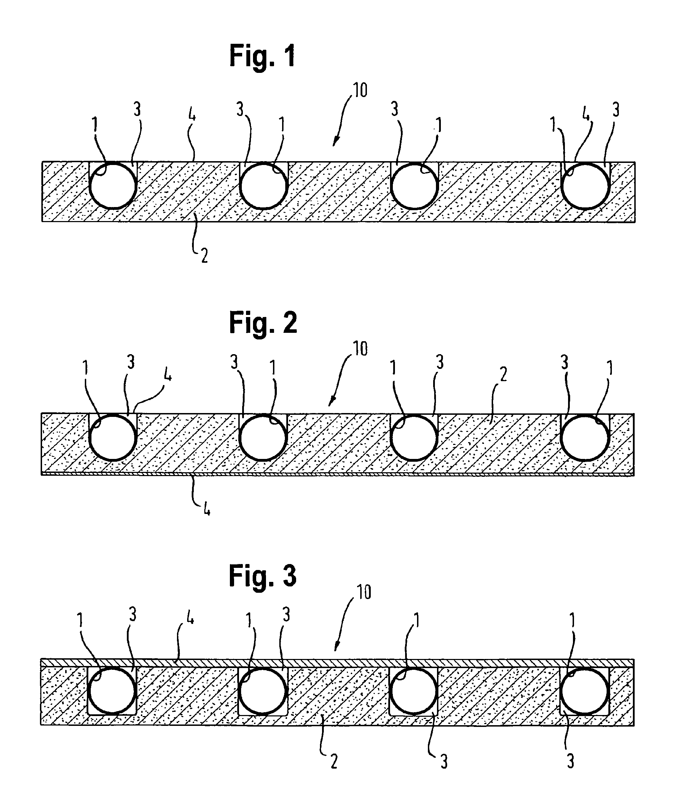

Die Fig. 1 bis 3 zeigen mehrere Ausführungsbeispiele eines erfindungsgemäßen plattenförmigen Elements für Heizungs- bzw. Kühlsysteme in jeweiligen Querschnittsansichten.

Das in der Fig. 1 gezeigte Element 10 ist als ein Verbundbauteil im Wesentlichen aus einer Trägerplatte 2 mit einer Reihe von Einfräsungen 3 für ein Medium durchleitende Rohre 1 aufgebaut, wobei bei diesem Ausführungsbeispiel die Seite der Einfräsungen 3 an der Trägerplatte 2 durch eine vergleichsweise dünne Folie 4 verschlossen ist. Dieses Ausführungsbeispiel ist durch eine sehr geringe Dicke bzw. einen sehr kleinen Aufbau gekennzeichnet. Die Tiefe der Einfräsungen 3 und damit die Lage der Rohre 1 erstreckt sich bei diesem Beispiel über in etwa 3/4 der Dicke der Trägerplatte 2. Hierdurch ist eine sehr gute Strahlungseigenschaft, sowohl was Wärme als auch was Kälte betrifft, gewährleistet. Das Rohr 1, welches beispielsweise aus Kunststoffmaterial hergestellt sein kann, ist als eine Art Endlosrohr in die Einfräsungen 3 der Trägerplatte 2 eingelegt und dort fixiert, beispielsweise mittels eines Klebers. Sofern die Abmessungen der Einfräsung 3 auf den Durchmesser des Rohres 1 abgestimmt sind, kann die Fixierung auch durch ein einfaches Einsetzen des Rohres aufgrund eines Klemmeffekts erfolgen. Dann ist ein Klebemittel oder ähnliches nicht mehr nötig.

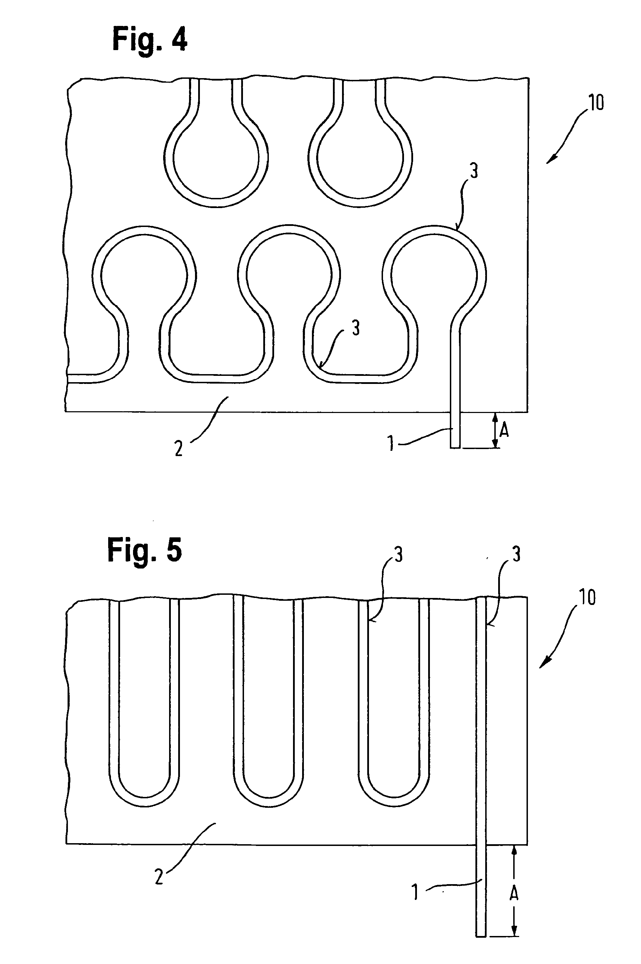

Das durch das Rohr 1 fließende Medium, beispielsweise Wasser eines Heizkreislaufs im Falle einer Flächenheizung, überträgt die Wärme direkt an den Boden und die Seitenwände der Einfräsungen 3 in der Trägerplatte und an die jeweiligen Oberflächen der Trägerplatte 2, so dass das gesamte plattenförmige Element 10 bei Bedarf sehr schnell mit wenig Energieaufwand aufgeheizt werden kann und auch entsprechend schnell wieder abkühlt. Energieverluste sind so reduziert. Die Trägerplatte 2 ist bei diesem Ausführungsbeispiel als eine Gipskartonplatte vorgesehen, in welche mit relativ geringem Aufwand die Einfräsungen 3 eingearbeitet werden können. Die nach Einlegen der Rohre 1 auf der Öffnungsseite der Einfräsungen 3 aufgebrachte Folie 4 ist beispielsweise eine Aluminiumfolie. Sie kann daher sehr dünn sein und je nach Einsatzzweck auch als eine isolierende Abschirmung oder als ein Element zur Vergrößerung der Wärmeabgabefläche verwendet werden. Die Rohre 1 sind beispielsweise als Kunststoffrohre oder aus einem Kunststoffverbundmaterial realisiert oder hergestellt. Bei diesem Ausführungsbeispiel (Fig. 1) sind die Böden der Einfräsungen 3 im Querschnitt in etwa halbrund geformt, so dass sich die Rohre 1 über im Wesentlichen mehr als die Hälfte ihres Außenumfangs direkt an das Material der Trägerplatte 2 quasi anschmiegen können. Auch dieser vergrößerte Kontaktbereich zwischen Rohr 1 und Trägerplatte 2 erhöht die thermische Übertragungsfähigkeit des Elements 10. Die Einfräsungen 3 und damit auch das Rohr 1 sind in der Trägerplatte 2 vorzugsweise schlangenförmig oder mäanderförmig vorgesehen, so dass eine möglichst großflächige Verteilung der Wärme oder der Kälte erreicht wird und das Rohr 1, welches beispielsweise als ein Endlosrohr bereitgestellt ist, keine Knicke oder unerwünschten Querschnittsreduzierungen hat. An den Enden des Rohres 1 ist jeweils ein Überstand A gegenüber der Trägerplatte 2 vorhanden, der weiter unten im Zusammenhang mit den in den Fig. 4 und 5 gezeigten Beispielen erläutert wird.

Das erfindungsgemäße plattenförmige Element 10 ist durch eine sehr geringe Aufbauhöhe, d. h. durch eine vergleichsweise geringe Dicke, gegenüber vergleichbaren Elementen aus dem Stand der Technik gekennzeichnet. Je nach Einsatzzweck kann die Dicke des Elements 10 und damit der Durchmesser des Rohres 1 variieren. Die Trägerplatte 2 ist vorzugsweise als eine Gipskartonplatte realisiert. Sie kann jedoch auch aus einem anderen Material mit einem Gipsanteil bestehen. Die Dicke der Trägerplatte kann beispielsweise im Bereich von 5 mm bis 50 mm liegen, so dass entsprechend tiefe Einfräsungen für entsprechend große Rohre 1 darin realisiert werden können. Die Tiefe der Einfräsungen 3 kann wie in dem in der Fig. 1 gezeigten Beispiel in etwa 3/4 der Dicke der Trägerplatte 2 betragen. Alternativ kann die Tiefe der Einfräsungen 3 nur über in etwa die Hälfte der Dicke der Trägerplatte 2 ausgeführt sein, so dass dann die Bruchstabilität und Festigkeit des Elements 10 erhöht wird. Die Form der Einfräsung 3 kann wie in den Fig. 1 und 2 gezeigt am Boden eine Art Rundung aufweisen, die dementsprechend das kreisrunde Rohr 1 annähernd allseitig an dem Material der Trägerplatte 2 anliegen lässt. Alternativ kann die Einfräsung 3 auch als eine im Querschnitt ovale Einfräsung oder eine eckige Einfräsung (vgl. Fig. 3) ausgeführt sein. Die Breite der Einfräsungen 3 kann beispielsweise im Bereich von 8 mm bis 20 mm liegen. Gleiches gilt für die Tiefe der Einfräsung, die abhängig von der Dicke der Trägerplatte 2 und dem Durchmesser des Rohres 1 realisiert wird.

Das das Medium führende Rohr 1 kann wie bei den in den Fig. 1 bis 3 dargestellten Ausführungsbeispielen im Wesentlichen bündig mit der oberen Oberfläche der Trägerplatte 2 installiert sein. Alternativ kann das Rohr 1 auch etwas tiefer eingesetzt sein oder mit einem leichten Vorstand gegenüber der oberen Oberfläche der Trägerplatte 2. Das Rohr 1 kann ein im Querschnitt kreisrundes Rohr wie in den Ausführungsbeispielen gezeigt sein. Alternativ kann gemäß der Erfindung das Rohr 1 auch als ein im Querschnitt ovales Rohr vorgesehen sein. Ein ovales Rohr hat den Vorteil, dass es, wenn es mit der längeren Seite in Richtung der Längsachse der Trägerplatte 2 bzw. des Elements 10 montiert wird, eine größere Fläche zur Verteilung der Wärme oder der Kälte aus dem Medium in den Rohren 1 (im Vergleich zu einem runden Rohr) bietet. Nach der Erfindung ist das Rohr 1 dauerhaft in die Trägerplatte 2 eingebettet und erleichtert so die Handhabung und Montage der Elemente 10.

Die Folie 4 kann als eine dünne Alufolie in einer Dicke von beispielsweise 0,0001 mm bis 5 mm vorgesehen sein. Bei dem Ausführungsbeispiel gemäß der Fig. 2 ist zusätzlich zu der an der Oberseite vorgesehenen relativ dünnen Alufolie 4 an der gegenüberliegenden (in der Fig. 2 unteren) Seite noch eine zweite, etwas dickere Folie 4 auf die Trägerplatte 2 aufgeklebt. Mit diesen Maßnahmen können gezielt die Eigenschaften hinsichtlich der Wärmeabstrahlung, Wärmeübertragung, Isolation oder auch hinsichtlich der Akustik des Elements 10 variiert werden. Beispielsweise kann die dicke Folie 4 eine Folie mit Perforationen sein, welche schallabsorbierend wirken. Alternativ kann die dicke Folie 4 auch ein Vlies oder ein Gewebe sein, das ebenfalls hinsichtlich der Akustik (Schallabsorption) von Vorteil ist, aber dennoch eine sehr gute Energieabstrahlung (Wärme bzw. Kälte) gewährleistet.

In der Fig. 3 ist ein weiteres Ausführungsbeispiel eines erfindungsgemäßen plattenförmigen Elements 10 gezeigt, wobei hier die Einfräsungen 3 im Querschnitt eckig ausgebildet sind. Außerdem ist im Unterschied zu den vorherigen Ausführungsbeispielen hier eine vergleichsweise dicke Folie 4 von oben auf die Trägerplatte 2 aufgeklebt, so dass die Einfräsungen und die darin eingelegten Rohre 1 von außen vollständig verschwunden sind und damit nicht mehr sichtbar bzw. spürbar sind.

Die Fig. 4 und 5 zeigen zwei weitere Ausführungsbeispiele des erfindungsgemäßen Plattenelements 10, wobei hier teilweise Draufsichten vor einer Montage der Folien 4 dargestellt sind zur Veranschaulichung der Form der Einfräsungen 3 und damit des Verlaufs des Rohres 1 im Inneren der Trägerplatte 2. Bei beiden Beispielen ist ebenso wie bei den zuvor beschriebenen Ausführungsbeispielen (Fig. 1 bis 3) das Rohr 1 als eine Art Endlosrohr in das Element 10 eingesetzt, mit einem vordefinierten Überstand A an den jeweiligen Enden. Der Überstand A kann nach der Erfindung vorzugsweise im Bereich von 10 mm bis 100 m liegen und dient einem leichten Anschluss der Elemente 10 an den Vorlauf bzw. Rücklauf eines Heiz- oder Kühlsystems bzw. dem Anschließen an benachbarte ähnliche derartige Elemente 10.

Das Beispiel gemäß der Fig. 4 zeigt eine schlaufenförmige oder schlangenförmige Anordnung der Einfräsung 3 und des Rohres 1 über die Fläche des Elements 10. Mit dieser Form eines quasi permanent gebogenen Verlaufs wird eine gute Verteilung der Wärme oder der Kälte über die gesamte Fläche des Elements 10 erreicht. Bei dem demgegenüber alternativen Beispiel der Fig. 5 ist eine Art mäanderförmiger Verlauf der Einfräsung 3 und damit des Rohres 1 zu sehen, die sich auch über die gesamte Fläche des Elements 10 (in den Fig. 4 und 5 nicht gezeigt) so weiter erstreckt. Die Trägerplatte 2 kann wie dargestellt durchgängig sein. Nach einer alternativen Ausgestaltung kann die Trägerplatte 2 mit einer Vielzahl von Löchern oder Ausnehmungen zwischen den Einfräsungen realisiert sein. Letzteres bietet im Hinblick auf das Gewicht, die Schallabsorption und die Energieverteilung Vorteile.

## Patentansprüche

1. Plattenförmiges Element (10) für Heizungs- oder Kühlsysteme von Gebäuden, wobei ein Medium führendes Rohr (1) zum Durchleiten eines Heiz- oder Kühlmediums vorgesehen ist und wobei eine Trägerplatte (2) zur Stabilisierung und Montage des Elements (10) sowie Mittel zur Halterung und Führung des Rohres (1) vorgesehen sind, **dadurch gekennzeichnet, dass** in der Trägerplatte (2) von einem Ende bis zum anderen Ende durchgehende Einfräsungen (3) derart vorgesehen sind, dass die Trägerplatte (2) selbst als Mittel zur Halterung und Führung des Rohres (1) dient, und dass die Trägerplatte (2) als ein Verbundteil aus mindestens einer Gipskartonplatte oder Platte mit einem Gipsanteil sowie einer daran befestigten Folie (4) aufgebaut ist.

2. Element (10) nach Anspruch 1, **dadurch gekennzeichnet, dass** das Rohr (1) mit einem Überstand A im Verhältnis zu der Trägerplatte (2) vorgesehen ist.

3. Element (10) nach Anspruch 1 oder 2, **dadurch gekennzeichnet, dass** die Einfräsung (3) in einer schlangenförmig oder mäanderförmig gebogenen Form weitestgehend ohne Kanten und Ecken vorgesehen ist.

4. Element (10) nach einem der vorangegangenen Ansprüche, **dadurch gekennzeichnet, dass** die Einfräsung (3) bodenseitig rund ist.

5. Element (10) nach einem der vorangegangenen Ansprüche, **dadurch gekennzeichnet, dass** die Tiefe der Einfräsung (3) so gewählt ist, dass das Rohr (1) im Wesentlichen bündig mit der Oberfläche der Trägerplatte (2) eingebaut ist.

6. Element (10) nach einem der vorangegangenen Ansprüche, **dadurch gekennzeichnet, dass** die Folie (4) aus einem Aluminiummaterial oder einem Verbundmaterial mit einem Aluminiummaterialanteil besteht.

7. Element (10) nach einem der vorangegangenen Ansprüche, **dadurch gekennzeichnet, dass** die Folie (4) mit Perforationen versehen ist.

8. Element (10) nach einem der vorangegangenen Ansprüche, **dadurch gekennzeichnet, dass** das Rohr (1) aus einem Kunststoffmaterial oder Verbundmaterial mit Kunststoffanteil besteht.

9. Element (10) nach einem der vorangegangenen Ansprüche, **dadurch gekennzeichnet, dass** die Trägerplatte (2) eine Gipskartonplatte mit mindestens einseitiger Beschichtung mit Karton ist.
